(19) Europäisches Patentamt
European Patent Office
Office européen des brevets

(11) EP 3 115 408 B1

(12) # EUROPÄISCHE PATENTSCHRIFT

(45) Veröffentlichungstag und Bekanntmachung des Hinweises auf die Patenterteilung:
**31.01.2018 Patentblatt 2018/05**

(51) Int Cl.:
***C08K 5/103*** (2006.01) ***C08K 3/04*** (2006.01)

(21) Anmeldenummer: **15175789.5**

(22) Anmeldetag: **08.07.2015**

(54) **VERBESSERUNG DER FLIESSFÄHIGKEIT VON THERMISCH LEITFÄHIGEN POLYCARBONATZUSAMMENSETZUNGEN**

IMPROVEMENT OF THE FLOWABILITY OF THERMALLY CONDUCTIVE POLYCARBONATE COMPOSITIONS

AMELIORATION DE LA RHEOLOGIE DE COMPOSITIONS DE POLYCARBONATE THERMOCONDUCTRICES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.01.2017 Patentblatt 2017/02**

(73) Patentinhaber: **Covestro Deutschland AG**
**51373 Leverkusen (DE)**

(72) Erfinder:
- **Heuer, Helmut Werner**
**51371 Leverkusen (DE)**
- **Wehrmann, Rolf**
**47800 Krefeld (DE)**
- **Boumans, Anke**
**47574 Goch (DE)**
- **Erkelenz, Michael**
**47239 Duisburg (DE)**

(74) Vertreter: **Levpat**
**c/o Covestro AG**
**Gebäude 4825**
**51365 Leverkusen (DE)**

(56) Entgegenhaltungen:
**US-A1- 2012 319 031** **US-A1- 2014 353 544**
**US-B1- 6 331 584**

- **DATABASE WPI Week 201203 Thomson Scientific, London, GB; AN 2011-Q64112 XP002751576, -& JP 2011 256359 A (SUMITOMO DOW LTD) 22. Dezember 2011 (2011-12-22)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 115 408 B1

## Beschreibung

Die vorliegende Erfindung betrifft thermisch leitfähige Polycarbonatzusammensetzungen mit verbesserter Fließfähigkeit.

Unter "Polycarbonatzusammensetzungen" im erfindungsgemäßen Sinne werden solche Zusammensetzungen verstanden, deren Hauptpolymerkomponente Polycarbonat ist.

Thermisch leitfähige Polycarbonatzusammensetzungen werden insbesondere in der Elektro- und Elektronikindustrie zum Wärmemanagement eingesetzt, beispielsweise für Wärmesenken, Kühlkörper oder Gehäuse im LED-Bereich, für Spulenummantelungen oder Gehäuse von Festplatten oder anderen Massenspeichern, Schaltungsträger bei dreidimensionalen MID-Anwendungen oder in der Aufbau- und Verbindungstechnik zur Wärmeabfuhr elektronischer Bauteile.

Die thermische Leitfähigkeit von Polycarbonatzusammensetzungen lässt sich durch den Zusatz eines thermisch leitfähigen Füllstoffs, üblicherweise ein Graphit, insbesondere ein expandierter Graphit, erreichen. Durch die für die Erzielung einer relevanten thermischen Leitfähigkeit notwendige Zugabemenge an Graphit sind die Schmelzeviskositäten der Zusammensetzungen aber so hoch, dass für eine Verarbeitung der Zusammensetzungen der Zusatz eines Fließverbesserers erforderlich ist.

Insbesondere für dünnwandige Gehäuseteile ist eine niedrige Schmelzeviskosität erforderlich, damit Bauteile mit gleichmäßiger Wandstärke realisiert werden können. Niedrige Schmelzeviskositäten sind des Weiteren bei der Realisierung von einteiligen Bauteilen komplexeren Aufbaus aus einem Material wesentlich.

Herkömmlich wird zur Fließverbesserung Bisphenol A-Diphosphat (BDP) verwendet, und zwar in Mengen von bis zu mehr als 10 Gew.-%, um den gewünschten Effekt zu erzielen. Dadurch wird aber die Wärmeformbeständigkeit stark herabgesetzt, was sich nachteilig auf die Bauteileigenschaften auswirkt.

Aufgabe der vorliegenden Erfindung war es somit insbesondere, die Fließfähigkeit von thermisch leitfähigen Polycarbonatzusammensetzungen bei einer guten Schmelzestabilität zu verbessern und entsprechende Polycarbonatzusammensetzungen bereitzustellen.

Überraschenderweise wurde nun gefunden, dass diese Aufgabe durch die Verwendung von Diglycerolestern in thermisch leitfähigen Polycarbonatzusammensetzungen, enthaltend Graphit, gelöst wird.

Die Aufgabe wird weiterhin gelöst durch Polycarbonatzusammensetzungen, enthaltend

A) 20 bis 94,8 Gew.-%, bevorzugt 60 bis 89,8 Gew.-%, besonders bevorzugt 65 bis 85 Gew.-% aromatisches Polycarbonat,
B) 5 bis 40 Gew.-%, bevorzugt 10 bis 35 Gew.-%, besonders bevorzugt 15 bis 35 Gew.-%, ganz besonders bevorzugt 20 bis 25 Gew.-% Graphit und
C) 0,2 Gew.-% bis 3,0 Gew.-%, bevorzugt 0,2 bis 2,5 Gew.-%, besonders bevorzugt 0,2 bis 2,0 Gew.-%, ganz besonders bevorzugt 0,2 bis 1,8 Gew.-% Diglycerolester.

In einer Ausführungsform sind keine weiteren Komponenten enthalten.

Die Polycarbonatzusammensetzungen, welchen Diglycerolester zugesetzt wurde, zeigen gute Schmelzestabilitäten mit verbesserten rheologischen Eigenschaften, und zwar eine höhere Schmelzevolumenfließrate (MVR), bestimmt nach DIN EN ISO 1133 (bei einer Prüftemperatur von 300 °C, Masse 1,2 kg, DIN EN ISO 1133-1:2012-03) und eine verbesserte Schmelzeviskosität, bestimmt nach ISO 11443 (ISO 11443:2014-04), im Vergleich zu entsprechenden Zusammensetzungen, die ansonsten dieselben Komponenten außer dem Diglycerolester enthalten. Dabei zeichnen sich die Zusammensetzungen weiterhin durch eine gute Wärmeformbeständigkeit aus, messbar anhand der Glasübergangstemperatur, welche mittels DSC (beim 2. Aufheizen, Aufheizrate: 20 K/min) bestimmt wird.

Die erfindungsgemäßen Polycarbonatzusammensetzungen können weitere übliche Additive enthalten. Weitere übliche Additive sind beispielsweise Entformungsmittel, Thermo- und/oder Umesterungsstabilisatoren, Flammschutzmittel, Antidrippingmittel, Antioxidantien, anorganische Pigmente, Ruß, Farbstoffe und/oder anorganische Füllstoffe wie Titandioxid, Silikate, Talk und/oder Bariumsulfat.

Bevorzugt enthalten die erfindungsgemäßen Zusammensetzungen neben den Komponenten A bis C und einer oder mehreren der Komponenten Entformungsmittel, Thermo- und/oder Umesterungsstabilisatoren, Flammschutzmittel, Antidrippingmittel, Antioxidantien, anorganische Pigmente, Ruß, Farbstoffe und/oder anorganische Füllstoffe wie Titandioxid, Silikate, Talk und/oder Bariumsulfat keine weiteren Komponenten.

Noch weiter bevorzugt bestehen solche Polycarbonatzusammensetzungen aus

A) 74,0 bis 85,0 Gew.-% aromatischem Polycarbonat,
B) 5 bis 25 Gew.-% Graphit,
C) 0,2 bis 2,0 Gew.-%, bevorzugt 0,2 bis 1,8 Gew.-% Diglycerolester,
D) optional bis zu 1,0 Gew.-% Thermostabilisator und/oder Umesterungsstabilisator und/oder

E) optional bis zu 10,0 Gew.-% eines weiteren Additivs oder mehrerer weiterer Additive aus der Gruppe der Entformungsmittel, Flammschutzmittel, Antidrippingmittel, Antioxidantien, der anorganischen Pigmente, Ruß, Farbstoffe und/oder der anorganischen Füllstoffe wie Titandioxid, Silikate, Talk und/oder Bariumsulfat.

Besonders bevorzugt enthalten die Polycarbonatzusammensetzungen

A) 74,0 Gew.-% bis 79,6 Gew.-% aromatisches Polycarbonat,
B) 20 bis 25 Gew.-% Graphit,
C) 0,2 bis 1,8 Gew.-% Diglycerolester,
D) optional bis zu 1,0 Gew.-% Thermostabilisator und/oder Umesterungsstabilisator und/oder
E) optional bis zu 10,0 Gew.-% eines weiteren Additivs oder mehrerer weiterer Additive aus der Gruppe der Entformungsmittel, Flammschutzmittel, Antidrippingmittel, Antioxidantien, der anorganischen Pigmente, Ruß, Farbstoffe und/oder der anorganischen Füllstoffe wie Titandioxid, Silikate, Talk und/oder Bariumsulfat.

Ganz besonders bevorzugte Zusammensetzungen enthalten keine weiteren Komponenten, also bestehen aus diesen Komponenten A) bis E).

Bei diesen noch weiter bzw. besonders bevorzugten Zusammensetzungen wird als Diglycerolester bevorzugt Diglycerolmonolaurylester, ggf. mit weiteren Diglycerolestern, eingesetzt. Bevorzugt wird bei den erfindungsgemäßen Zusammensetzungen expandierter Graphit eingesetzt.

Die Zusammensetzungen, in welchen auf erfindungsgemäße Weise die Fließfähigkeit verbessert wird, werden vorzugsweise zur Herstellung von Formteilen verwendet. Wegen der verbesserten Fließfähigkeit sind sie besonders zur Herstellung von dünnen Bauteilen geeignet.

Die Schmelzeviskositäten der Zusammensetzungen sind stark abhängig von der Menge des eingesetzten Graphits. Mit zunehmender Menge steigt auch die Schmelzeviskosität bei verschiedenen Scherraten, ermittelt nach ISO 11443 (Kegel-Platte-Anordnung, ISO 11443:2014-04). Die bei 340 °C und einer Scherrate von 1000 1/s ermittelten Schmelzviskositäten liegen bevorzugt unter 300 Pa·s, weiter bevorzugt unter 200 Pa·s.

Die einzelnen Bestandteile der erfindungsgemäßen Zusammensetzungen sind im Folgenden noch näher erläutert:

Komponente A

Unter "Polycarbonat" werden erfindungsgemäß sowohl Homopolycarbonate als auch Copolycarbonate verstanden. Dabei können die Polycarbonate in bekannter Weise linear oder verzweigt sein. Erfindungsgemäß können auch Mischungen von Polycarbonaten verwendet werden.

Ein Teil, bis zu 80 Mol-%, vorzugsweise von 20 Mol-% bis zu 50 Mol-%, der Carbonat-Gruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Die thermoplastischen Polycarbonate einschließlich der thermoplastischen, aromatischen Polyestercarbonate haben mittlere Molekulargewichte $M_w$ (ermittelt durch Messung der relativen Viskosität bei 25°C in $CH_2Cl_2$ und einer Konzentration von 0,5 g pro 100 ml $CH_2Cl_2$) von 20.000 g/mol bis 32.000 g/mol, vorzugsweise von 23.000 g/mol bis 31.000 g/mol, insbesondere von 24.000 g/mol bis 31.000 g/mol.

Die Herstellung der Polycarbonate, die in den Zusammensetzungen enthalten sind, welchen Diglycerolester zur Verbesserung der Fließfähigkeit zugesetzt wird, erfolgt in bekannter Weise aus Diphenolen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertne, BAYER AG, "Polycarbonates" in Encyclopedia of Polymer Science and Engineering, Volume 11, Second Edition, 1988, Seiten 648-718 und schließlich auf U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien, 1992, Seiten 117-299 verwiesen.

Die Herstellung aromatischer Polycarbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten. Ebenso ist eine Herstellung über ein Schmelzepolymerisationsverfahren durch Umsetzung von Diphenolen mit beispielsweise Diphenylcarbonat möglich.

Für die Herstellung von Polycarbonaten geeignete Dihydroxyarylverbindungen sind solche der Formel (2)

HO-Z-OH (2),

in welcher

Z ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3)

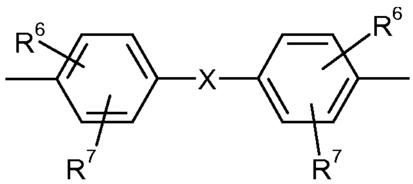

(3),

in der

$R^6$ und $R^7$ unabhängig voneinander für H, $C_1$- bis $C_{18}$-Alkyl-, $C_1$- bis $C_{18}$-Alkoxy, Halogen wie Cl oder Br oder für jeweils gegebenenfalls substituiertes Aryl- oder Aralkyl, bevorzugt für H oder $C_1$- bis $C_{12}$-Alkyl, besonders bevorzugt für H oder $C_1$- bis $C_8$-Alkyl und ganz besonders bevorzugt für H oder Methyl stehen, und

X für eine Einfachbindung, $-SO_2-$, -CO-, -O-, -S-, $C_1$- bis $C_6$-Alkylen, $C_2$- bis $C_5$-Alkyliden oder $C_5$- bis $C_6$-Cycloalkyliden, welches mit $C_1$- bis $C_6$-Alkyl, vorzugsweise Methyl oder Ethyl, substituiert sein kann, ferner für $C_6$- bis $C_{12}$-Arylen, welches gegebenenfalls mit weiteren Heteroatome enthaltenden aromatischen Ringen kondensiert sein kann, steht.

Bevorzugt steht X für eine Einfachbindung, $C_1$- bis $C_5$-Alkylen, $C_2$- bis $C_5$-Alkyliden, $C_5$- bis $C_6$-Cycloalkyliden, -O-, -SO-, -CO-, -S-, $-SO_2-$oder für einen Rest der Formel (3a)

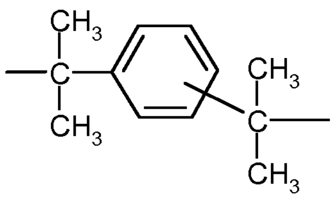

(3a).

Für die Herstellung der Polycarbonate geeignete Diphenole sind beispielsweise Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha$-$\alpha$'-Bis-(hydroxyphenyl)-diisopropylbenzole, Phthalimidine abgeleitet von Isatin- oder Phenolphthaleinderivaten sowie deren kernalkylierte, kernarylierte und kernhalogenierte Verbindungen.

Bevorzugte Diphenole sind 4,4'-Dihydroxydiphenyl, 2,2-Bis-(4-hydroxyphenyl)-propan (Bisphenol A), 2,4-Bis-(4-hydroxyphenyl)-2-methylbutan, 1,1-Bis-(4-hydroxyphenyl)-p-diisopropylbenzol, 2,2-Bis-(3-methyl-4-hydroxyphenyl)-propan, Dimethyl-Bisphenol A, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol und 1,1--Bis-(4-hydroxyphenyl)-3,3,5-trimethylcyclohexan.

Besonders bevorzugte Diphenole sind 2,2-Bis-(4-hydroxyphenyl)-propan (Bisphenol A), 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethylcyclohexan und Dimethyl-Bisphenol A.

Diese und weitere geeignete Diphenole sind z.B. in US-A 3 028 635, US-A 2 999 825, US-A 3 148 172, US-A 2 991 273, US-A 3 271 367, US-A 4 982 014 und US-A 2 999 846, in DE-A 1 570 703, DE-A 2063 050, DE-A 2 036 052, DE-A 2 211 956 und DE-A 3 832 396, in FR-A 1 561 518, in der Monographie "H. Schnell, Chemistry and Physics of Polycarbonates, Interscience Publishers, New York 1964" sowie in JP-A 62039/1986, JP-A 62040/1986 und JP-A 105550/1986 beschrieben.

Im Fall der Homopolycarbonate wird nur ein Diphenol eingesetzt, im Fall der Copolycarbonate werden mehrere Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert.-Butylphenol, Cumylphenol sowie deren Mischungen.

Bevorzugte Kettenabbrecher sind die Phenole, welche ein- oder mehrfach mit $C_1$- bis $C_{30}$-Alkylresten, linear oder verzweigt, bevorzugt unsubstituiert, oder mit tert-Butyl substituiert sind. Besonders bevorzugte Kettenabbrecher sind Phenol, Cumylphenol und/oder p-tert-Butylphenol.

Die Menge an einzusetzendem Kettenabbrecher beträgt bevorzugt 0,1 bis 5 Mol-%, bezogen auf Mole an jeweils eingesetzten Diphenolen. Die Zugabe der Kettenabbrecher kann vor, während oder nach der Umsetzung mit einem Kohlensäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri-(4-hydroxyphenyl)-benzol, 1,1,1-Tri-(4-hydroxyphenyl)-ethan, Tri-(4-hydroxyphenyl)-phenylmethan, 2,4-Bis-(4-hydroxyphenylisopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol-%, bezogen auf Mole an jeweils eingesetzten Diphenolen.

Die Verzweiger können entweder mit den Diphenolen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Diphenolen eingesetzt.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Zur Einarbeitung von Additiven wird die Komponente A bevorzugt in Form von Pulvern, Granulaten oder aus Gemischen aus Pulvern und Granulaten eingesetzt.

Als Polycarbonat kann auch eine Mischung aus verschiedenen Polycarbonaten eingesetzt werden, z.B. aus den Polycarbonaten A1 und A2:

Die Menge des aromatischen Polycarbonats A1 beträgt bevorzugt, bezogen auf die Gesamtmenge an Polycarbonat, 25,0 bis 85,0 Gew.-%, bevorzugt 28,0 bis 84,0 Gew.-%, besonders bevorzugt 30,0 bis 83,0 Gew.-%, wobei dieses aromatische Polycarbonat auf Basis von Bisphenol A mit einer bevorzugten Schmelze-Volumenfließrate MVR von 7 bis 15 $cm^3$/10 min, weiter bevorzugt mit einer Schmelze-Volumenfließrate MVR von 8 bis 12 $cm^3$/10 min und besonders bevorzugt mit einer Schmelze-Volumenfließrate MVR von 8 bis 11 $cm^3$/10 min, bestimmt gemäß ISO 1133 (Prüftemperatur 300°C, Masse 1,2 kg, DIN EN ISO 1133-1:2012-03), ist.

Die Menge des pulverförmigen aromatischen Polycarbonats A2 beträgt bevorzugt, bezogen auf die Gesamtmenge an Polycarbonat, 3,0 bis 12,0 Gew.-%, bevorzugt 4,0 bis 11,0 Gew.-%, besonders bevorzugt 5 bis 10,0 Gew.-%, wobei dieses aromatische Polycarbonat bevorzugt auf Basis von Bisphenol A mit einer bevorzugten Schmelze-Volumenfließrate MVR von 3 bis 8 $cm^3$/10 min, weiter bevorzugt mit einer Schmelze-Volumenfließrate MVR von 4 bis 7 $cm^3$/10 min, und besonders bevorzugt mit einer Schmelze-Volumenfließrate MVR von 6 $cm^3$/10 min, bestimmt gemäß ISO 1133 (Prüftemperatur 300°C, Masse 1,2 kg, DIN EN ISO 1133-1:2012-03), ist.

Insgesamt werden in erfindungsgemäßen Zusammensetzungen 20 bis 94,8 Gew.-%, bevorzugt 60 bis 89,8 Gew.-%, weiter bevorzugt 65 bis 85 Gew.-%, besonders bevorzugt 74,0 bis 85,0 Gew.-%, ganz besonders bevorzugt 74,0 bis 79,6 Gew.-% aromatisches Polycarbonat eingesetzt.

**Komponente B**

Graphite werden in Form von Fasern, Stäbchen, Kugeln, Hohlkugeln, Plättchen und/oder in Pulverform, jeweils sowohl in aggregierter als auch in agglomerierter Form, bevorzugt in Plättchenform, in den Zusammensetzungen verwendet.

Unter einem Partikel mit plättchenförmiger Struktur wird erfindungsgemäß ein Partikel verstanden, der eine flache Geometrie aufweist. So ist die Höhe der Partikel üblicherweise deutlich geringer im Vergleich zu der Breite oder Länge der Partikel. Derartige flache Partikel können wiederum zu Gebilden agglomeriert oder aggregiert sein.

Es wird bevorzugt expandierter Graphit, alleine oder in Mischung mit nicht expandiertem Graphit, besonders bevorzugt nur expandierter Graphit, verwendet.

Bei den expandierten Graphiten sind die einzelnen Basalebenen des Graphits durch eine spezielle Behandlung auseinandergetrieben, wodurch eine Volumenvergrößerung des Graphits, bevorzugt um den Faktor 200 bis 400, resultiert. Die Herstellung von expandierten Graphiten ist unter anderem in den Schriften US 1,137,373 A, US 1,191,383 A sowie US 3,404,061 A beschrieben.

Erfindungsgemäß bevorzugt wird ein expandierter Graphit mit einer relativ hohen spezifischen Oberfläche (expandierte Graphitschuppen), ermittelt als BET-Oberfläche mittels Stickstoffadsorption nach ASTM D3037, verwendet. Bevorzugt werden Graphite mit einer BET-Oberfläche von $\geq 5\ m^2/g$, besonders bevorzugt $\geq 10\ m^2/g$ und ganz besonders bevorzugt $\geq 18\ m^2/g$ in den thermoplastischen Zusammensetzungen eingesetzt.

Kommerziell verfügbare Graphite sind unter anderem Ecophit® GFG 5, Ecophit® GFG 50, Ecophit® GFG 200, Ecophit® GFG 350, Ecophit® GFG 500, Ecophit® GFG 900, Ecophit® GFG 1200 von der Firma SGL Carbon GmbH, TIMREX® BNB90, TIMREX® KS5-44, TIMREX® KS6, TIMREX® KS150, TIMREX® SFG44, TIMREX® SFG150, TIMREX® C-THERM™ 001 und TIMREX® C-THERM™ 011 von der Firma TIMCAL Ltd., SC 20 O, SC 4000 O/SM und SC 8000 O/SM von der Graphit Kropfmühl AG, Mechano-Cond 1, Mechano-Lube 2 und Mechano-Lube 4G von der Firma H.C. Carbon GmbH, Nord-Min 251 und Nord-Min 560T von der Firma Nordmann Rassmann GmbH und ASBURY A99, Asbury 230U und Asbury 3806 von der Firma Asbury Carbons.

**Komponente C**

Die als Fließverbesserer eingesetzten Diglycerolester sind Ester von Carbonsäuren mit Diglycerol. Dabei sind Ester auf Basis verschiedener Carbonsäuren geeignet. Auch können unterschiedliche Isomere von Diglycerol Basis für die Ester bilden. Neben Monoestern können auch Mehrfachester von Diglycerol eingesetzt werden. Anstelle von Reinverbindungen können auch Gemische verwendet werden.

Isomere von Diglycerol, welche die Basis für die erfindungsgemäß eingesetzten Diglycerolester bilden, sind die folgenden:

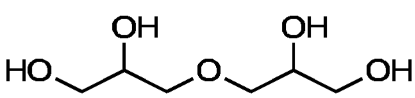

α,α-Diglycerol

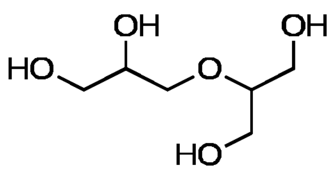

α,β-Diglycerol

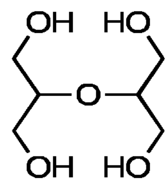

β,β-Diglycerol

Für die erfindungsgemäß verwendeten Diglycerolester können solche Isomere dieser Formeln eingesetzt werden, die einfach oder mehrfach verestert sind. Als Fließhilfsmittel einsetzbare Gemische bestehen aus den Diglyceroledukten sowie daraus abgeleiteten Esterendprodukten, beispielweise mit den Molekulargewichten 348 g/mol (Monolaurylester) oder 530 g/mol (Dilaurylester).

Die erfindungsgemäß in der Zusammensetzung enthaltenen Diglycerolester leiten sich vorzugsweise von gesättigten oder ungesättigten Monocarbonsäuren mit einer Kettenlänge von 6 bis 30 C-Atomen ab. Geeignete Monocarbonsäuren sind beispielsweise Caprylsäure ($C_7H_{15}COOH$, Octansäure), Caprinsäure ($C_9H_{19}COOH$, Decansäure), Laurinsäure ($C_{11}H_{23}COOH$, Dodecansäure), Myristinsäure ($C_{13}H_{27}COOH$, Tetradecansäure), Palmitinsäure

($C_{15}H_{31}COOH$, Hexadecansäure), Margarinsäure ($C_{16}H_{33}COOH$, Heptadecansäure), Stearinsäure ($C_{17}H_{35}COOH$, Octadecansäure), Arachinsäure ($C_{19}H_{39}COOH$, Eicosansäure), Behensäure ($C_{21}H_{43}C0OH$, Docosansäure), Lignocerinsäure ($C_{23}H_{47}COOH$, Tetracosansäure), Palmitoleinsäure ($C_{15}H_{29}COOH$, (9Z)-Hexadeca-9-ensäure), Petroselinsäure ($C_{17}H_{33}COOH$, (6Z)-Octadeca-6-ensäure), Elaidinsäure ($C_{17}H_{33}COOH$, (9E)-Octadeca-9-ensäure), Linolsäure ($C_{17}H_{31}COOH$, (9Z,12Z)-Octadeca-9,12-diensäure), alpha- oder gamma-Linolensäure ($C_{17}H_{29}COOH$, (9Z,12Z,15Z)-Octadeca-9,12,15-triensäure und (6Z,9Z,12Z)-Octadeca-6,9,12-triensäure), Arachidonsäure ($C_{19}H_{31}COOH$, (5Z,8Z,11Z,14Z)-Eicosa-5,8,11,14-tetraensäure), Timnodonsäure ($C_{19}H_{29}COOH$, (5Z,8Z,11Z,14Z,17Z)-Eicosa-5,8,11,14,17-pentaensäure) und Cervonsäure ($C_{21}H_{31}COOH$, (4Z,7Z,10Z,13Z,16Z,19Z)-Docosa-4,7,10,13,16,19-hexaensäure). Besonders bevorzugt sind Laurinsäure, Palmitinsäure und/oder Stearinsäure.

Als Diglycerolester ist besonders bevorzugt mindestens ein Ester der Formel (I)

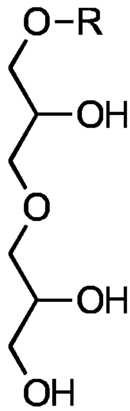
(I)

mit R = $COC_nH_{2n+1}$ und/oder R = COR',
wobei n eine ganze Zahl ist und R' ein verzweigter Alkylrest oder ein verzweigter oder unverzweigter Alkenylrest ist und $C_nH_{2n+1}$ ein aliphatischer, gesättigter linearer Alkylrest ist,
enthalten.

Dabei ist n bevorzugt eine ganze Zahl von 6-24, so dass $C_nH_{2n+1}$ beispielsweise n-Hexyl, n-Heptyl, n-Octyl, n-Nonyl, n-Decyl, n-Dodecyl, n-Tridecyl, n-Tetradecyl, n-Hexadecyl oder n-Octadecyl ist. Weiter bevorzugt ist n = 8 bis 18, besonders bevorzugt 10 bis 16, ganz besonders bevorzugt 12 (Diglycerolmonolaurat-Isomer mit dem Molekulargewicht 348 g/mol, welches als Hauptprodukt in einem Gemisch besonders bevorzugt ist). Die vorgenannten Estergruppierungen liegen erfindungsgemäß bevorzugt auch bei den anderen Isomeren des Diglycerols vor.

Es kann sich demzufolge auch um ein Gemisch verschiedener Diglycerolester handeln.

Bevorzugt eingesetzte Diglycerolester weisen einen HLB-Wert von mindestens 6, besonders bevorzugt 6 bis 12 auf, wobei unter dem HLB-Wert die sog. "hydrophilic-lipophilic balance" verstanden wird, die gemäß der Methode nach Griffin wie folgt berechnet wird:

$$HLB = 20 \text{ x } (1 - M_{lipophil}/M),$$

wobei $M_{lipophil}$ die Molmasse des lipophilen Anteils des Diglycerolesters ist und M die Molmasse des Diglycerolesters.

**Komponente D**

Die erfindungsgemäßen Zusammensetzungen enthalten optional einen oder mehrere Thermo- und/oder Umesterungsstabilisatoren.

Als Thermostabilisatoren eignen sich bevorzugt Triphenylphosphin, Tris-(2,4-di-tert-butylphenyl)phosphit (Irgafos® 168), Tetrakis-(2,4-di-tert-butylphenyl)-[1,1-biphenyl]-4,4'-diylbisphosphonit, Octadecyl-3-(3,5-di-tert-butyl-4-hydroxyphenyl)-propionat (Irganox® 1076), Bis-(2,4-dicumylphenyl)-pentaerythritoldiphosphit (Doverphos® S-9228-PC), Bis-(2,6-di-tert-butyl-4-methylphenyl)-pentaerythritoldiphosphit (ADK STAB PEP-36). Sie werden allein oder im Gemisch (z. B. Irganox® B900 (Gemisch aus Irgafos® 168 und Irganox® 1076 im Verhältnis 1:3) oder Doverphos® S-9228-PC mit Irganox® B900 bzw. Irganox® 1076) eingesetzt.

Als Umesterungsstabilisatoren sind bevorzugt Phosphate oder Sulfonsäureester enthalten. Bevorzugt ist Triisooctylphosphat als Stabilisator enthalten.

Die Thermostabilisatoren und/oder Umesterungsstabilisatoren werden bevorzugt in einer Menge bis zu 1,0 Gew.-%, besonders bevorzugt in einer Gesamtmenge von 0,003 bis 0,2 Gew.-% eingesetzt.

**Komponente E**

Zusätzlich sind optional bis zu 10,0 Gew.-%, bevorzugt 0,10 bis 8,0 Gew.-%, besonders bevorzugt 0,2 bis 3,0 Gew.-% weitere übliche Additive ("weitere Additive") enthalten. Die Gruppe der weiteren Additive umfasst keine Thermostabilisatoren und keine Umesterungsstabilisatoren, da diese bereits als Komponente C beschrieben sind.

Solche Additive, wie sie üblicherweise bei Polycarbonat-haltigen Zusammensetzungen zugesetzt werden, sind insbesondere die in EP-A 0 839 623, WO-A 96/15102, EP-A 0 500 496 oder "Plastics Additives Handbook", Hans Zweifel, 5th Edition 2000, Hanser Verlag, München beschriebenen Flammschutzmittel, Antidrippingmittel, Antioxidantien, Ruß und/oder Farbstoffe, anorganische Füllstoffe wie Titandioxid, Silikate, Talk und/oder Bariumsulfat und/oder Entformungsmittel, in den für Polycarbonat üblichen Mengen. Diese Additive können einzeln oder auch im Gemisch zugesetzt werden.

Die Zusammensetzung ist bevorzugt frei von Entformungsmitteln, z.B. Glycerolmonostearat (GMS), da der Diglycerolester selbst als Entformungsmittel wirkt.

Die Herstellung der Polycarbonat-Zusammensetzungen, enthaltend die Komponenten A bis C und ggf. D und/oder E erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den Komponenten B bis E verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten B bis E der erfindungsgemäßen Zusammensetzung durch bekannte Verfahren oder als Masterbatch in das Polycarbonat eingebracht werden.

Die Verwendung von Masterbatchen ist zum Einbringen der Komponenten B bis E, einzeln oder in Mischung, bevorzugt.

In diesem Zusammenhang kann die erfindungsgemäße Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann können die restlichen Ausgangsstoffe einzeln und/oder ebenfalls gemischt hinzugegeben werden.

Die Zusammenführung und Durchmischung einer Vormischung in der Schmelze kann auch in der Plastifiziereinheit einer Spritzgussmaschine erfolgen. Hierbei wird die Schmelze im anschließenden Schritt direkt in einen Formkörper überführt.

Die Herstellung der Kunststoffformteile erfolgt vorzugsweise durch Spritzguss.

Die thermisch leitfähigen Polycarbonat-Zusammensetzungen, denen Diglycerolester zur Fließverbesserung zugesetzt ist, sind zur Herstellung von Bauteilen für die Elektro- und Elektronikindustrie zum Wärmemanagement, insbesondere für komplexe Kühlkörper, Kühlbleche, Wärmesenken und Gehäuse in der Beleuchtungstechnik wie z. B. Lampen oder Scheinwerfer geeignet.

**Beispiele**

**1. Beschreibung der Rohstoffe und Prüfmethoden**

Die in den folgenden Beispielen beschriebenen Polycarbonatzusammensetzungen wurden auf einem Extruder ZE 25 der Fa. Berstorff mit einem Durchsatz von 10 kg/h durch Compoundierung hergestellt. Die Schmelzetemperatur betrug 275 °C.

**Komponente A-1:** Lineares Polycarbonat auf Basis von Bisphenol A mit einer Schmelze-Volumenfließrate MVR von 16,5 $cm^3$/10 min (gemäß ISO 1133 (DIN EN ISO 1133-1:2012-03), bei einer Prüftemperatur 250°C und 2,16 kg Belastung).

**Komponente A-2:** Pulver eines linearen Polycarbonates auf Basis von Bisphenol A mit einer Schmelze-Volumenfließrate MVR von 19 $cm^3$/10 min (gemäß ISO 1133 (DIN EN ISO 1133-1:2012-03), bei einer

Prüftemperatur 300°C und 1,2 kg Belastung).

**Komponente B-1:** Expandierter Graphit Ecophit SC4000 O/MS der Firma SGL Carbon SE, Wiesbaden.
**Komponente B-2:** Expandierter Graphit Ecophit GFG500 der Firma SGL Carbon SE, Wiesbaden.
**Komponente C:** Poem DL-100 (Diglycerolmonolaurat) der Fa. Riken Vitamin als Fließhilfsmittel.
**Komponente D:** Triisooctylphosphat (TOF) der Firma Lanxess AG als Umesterungsstabilisator.

Die Bestimmung des Schmelze-Volumenfließrate (MVR) erfolgte nach ISO 1133 (bei einer Prüftemperatur von 300 °C, Masse 1,2 kg, DIN EN ISO 1133-1:2012-03) mit dem Gerät Zwick 4106 der Firma Zwick Roell.
Die Bestimmung der Schmelzeviskositäten erfolgte nach ISO 11443 (Kegel-Platte-Anordnung).

**2. Zusammensetzungen**

**Tabelle 1**

| | | V1 | B1 | B2 | B3 |
|---|---|---|---|---|---|
| **A-1** | Gew.-% | 68,00 | 68,00 | 68,00 | 68,00 |
| **A-2** | Gew.-% | 7,00 | 6,20 | 6,00 | 5,80 |
| **B-1** | Gew.-% | 25,00 | 25,00 | 25,00 | 25,00 |
| **C** | Gew.-% | - | 0,80 | 1,00 | 1,20 |
| | | | | | |
| **Schmelzeviskosität bei 320°C** | | | | | |
| **eta 50** | Pa·s | 473 | 480 | 338 | 307 |
| **eta 100** | Pa·s | 360 | 407 | 213 | 212 |
| **eta 200** | Pa·s | 280 | 327 | 141 | 149 |
| **eta 500** | Pa·s | 190 | 206 | | 103 |
| **eta 1000** | Pa·s | 150 | 135 | | 85 |
| **eta 1500** | Pa·s | 129 | 102 | | 74 |
| **eta 5000** | Pa·s | 76 | | | |
| **Schmelzeviskosität bei 340°C** | | | | | |
| **eta 50** | Pa·s | 284 | 185 | 126 | 151 |
| **eta 100** | Pa·s | 220 | 158 | 89 | 83 |
| **eta 200** | Pa·s | 166 | 126 | 61 | 60 |
| **eta 500** | Pa·s | 113 | 84 | | 44 |
| **eta 1000** | Pa·s | 94 | 63 | | 35 |
| **eta 1500** | Pa·s | 84 | 51 | | 32 |
| **eta 5000** | Pa·s | | | | |
| **Schmelzeviskosität bei 360°C** | | | | | |
| **eta 50** | Pa·s | 205 | | | |
| **eta 100** | Pa·s | 153 | | | |
| **eta 200** | Pa·s | 110 | | | |
| **eta 500** | Pa·s | 78 | | | |
| **eta 1000** | Pa·s | | | | |
| **eta 1500** | Pa·s | | | | |

(fortgesetzt)

| | | | | | |
|---|---|---|---|---|---|
| **Schmelzeviskosität bei 360°C** | | | | | |
| **eta 5000** | Pa·s | | | | |

Die Werte für die Schmelzeviskositäten in Tabelle 1 sind jeweils angegeben zu den Scherraten in [1/sec]. Freie Felder bedeuten hierbei, dass die Zusammensetzungen so fließfähig waren, dass keine Bestimmung der Schmelzeviskosität mehr erfolgen konnte.

Tabelle 1 zeigt, dass die Zusammensetzungen, denen im Sinne der Erfindung Diglycerolester zugegeben wurde, überraschend eine deutliche Verbesserung der Schmelzeviskosität, gemessen bei verschiedenen Messtemperaturen bei unterschiedlichen Scherraten, zeigen. Bei ausreichend hoher Diglycerolesterzugabe zeigen die Zusammensetzungen sogar über den gesamten Scherbereich bei verschiedenen Messtemperaturen jeweils deutlich reduzierte Schmelzeviskositäten, was eine verbesserte Fließfähigkeit bedeutet.

**Tabelle 2**

| | | V2 | B4 | B5 | B6 |
|---|---|---|---|---|---|
| **A-1** | Gew.-% | 73,00 | 73,00 | 73,00 | 73,00 |
| **A-2** | Gew.-% | 7,00 | 6,79 | 6,69 | 6,59 |
| **B-2** | Gew.-% | 20,00 | 20,00 | 20,00 | 20,00 |
| **C** | Gew.-% | - | 0,20 | 0,30 | 0,40 |
| **D** | Gew.-% | - | 0,01 | 0,01 | 0,01 |
| | | | | | |
| **Schmelzeviskosität bei 320°C** | | | | | |
| **eta 50** | Pa·s | 467 | 390 | 405 | 394 |
| **eta 100** | Pa·s | 357 | 301 | 305 | 290 |
| **eta 200** | Pa·s | 267 | 232 | 231 | 226 |
| **eta 500** | Pa·s | 190 | 168 | 167 | 161 |
| **eta 1000** | Pa·s | 149 | 135 | 133 | 127 |
| **eta 1500** | Pa·s | 129 | 115 | 114 | 110 |
| **eta 5000** | Pa·s | 77 | 69 | 69 | 68 |
| **Schmelzeviskosität bei 340°C** | | | | | |
| **eta 50** | Pa·s | 314 | 260 | 254 | 237 |
| **eta 100** | Pa·s | 241 | 198 | 193 | 183 |
| **eta 200** | Pa·s | 183 | 154 | 148 | 141 |
| **eta 500** | Pa·s | 130 | 111 | 104 | 99 |
| **eta 1000** | Pa·s | 101 | 88 | 82 | 77 |
| **eta 1500** | Pa·s | 88 | 76 | 72 | 68 |
| **eta 5000** | Pa·s | 55 | 49 | 47 | 45 |
| **Schmelzeviskosität bei 360°C** | | | | | |
| **eta 50** | Pa·s | 260 | 198 | 171 | 167 |
| **eta 100** | Pa·s | 180 | 151 | 132 | 129 |
| **eta 200** | Pa·s | 141 | 113 | 101 | 98 |
| **eta 500** | Pa·s | 105 | 80 | 70 | 69 |
| **eta 1000** | Pa·s | 84 | 62 | 56 | 54 |

(fortgesetzt)

| **Schmelzeviskosität bei 360°C** | | | | | |
|---|---|---|---|---|---|
| **eta 1500** | Pa·s | 70 | 54 | 49 | 47 |
| **eta 5000** | Pa·s | 42 | 36 | 33 | 32 |
| **MVR** | ml/10 min | 0,7 | 1,1 | 1,2 | 1,4 |
| **IMVR20'** | ml/10 min | 0,7 | 1,1 | 1,0 | 1,1 |
| **Delta MVR/IMVR20'** | | 0,0 | 0 | -0,2 | -0,3 |

In Tabelle 2 ist gezeigt, dass bereits geringe Mengen Diglycerolester einen sichtbaren Einfluss auf die Schmelze-Volumenfließrate MVR Graphit-haltiger Polycarbonatzusammensetzungen haben. Da die Graphit-Gehalte der Zusammensetzungen B4 bis B6 relativ hoch sind, sind die Schmelzevolumenfließraten weiterhin relativ niedrig. Die Schmelzeviskositäten, gemessen bei verschiedenen Messtemperaturen bei unterschiedlichen Scherraten, sind bei zunehmender Menge des Diglycerolesters verbessert.

**Tabelle 3**

| **Rezeptur** | | **V3** | **B7** | **B8** | **B9** | **V4** | **B10** | **B11** | **B12** |
|---|---|---|---|---|---|---|---|---|---|
| A-1 | Gew.-% | 63,00 | 63,00 | 63,00 | 63,00 | 58,00 | 58,00 | 58,00 | 58,00 |
| A-2 | Gew.-% | 7,00 | 6,20 | 5,50 | 5,20 | 7,00 | 6,20 | 5,50 | 5,20 |
| B-1 | Gew.-% | 30,00 | 30,00 | 30,00 | 30,00 | 35,00 | 35,00 | 35,00 | 35,00 |
| C | Gew.-% | - | 0,80 | 1,50 | 1,80 | - | 0,80 | 1,50 | 1,80 |
| | | | | | | | | | |
| Tg | °C | 143,9 | 137,7 | 132,3 | 129,5 | 144,4 | 139,3 | 131,3 | 130,0 |
| **Schmelzeviskosität bei 320°C** | | | | | | | | | |
| eta 50 | Pa·s | 1404 | 912 | 575 | 339 | 1622 | 758 | 562 | 589 |
| eta 100 | Pa·s | 1000 | 603 | 407 | 316 | 851 | 479 | 400 | 447 |
| eta 200 | Pa·s | 667 | 376 | 251 | 267 | 565 | 324 | 270 | 316 |
| eta 500 | Pa·s | 358 | 218 | 150 | 178 | 339 | 222 | 182 | 195 |
| eta 1000 | Pa·s | 225 | 155 | 83 | 120 | 249 | 151 | 123 | 126 |
| eta 1500 | Pa·s | 175 | 117 | 64 | 98 | 198 | 124 | 101 | 96 |
| eta 5000 | Pa·s | 96 | 68 | | 52 | 111 | 72 | 59 | 52 |
| **Schmelzeviskosität bei 340°C** | | | | | | | | | |
| eta 50 | Pa·s | 912 | 776 | 351 | | 646 | 491 | 302 | 417 |
| eta 100 | Pa·s | 652 | 468 | 214 | | 428 | 316 | 229 | 275 |
| eta 200 | Pa·s | 438 | 282 | 148 | | 324 | 200 | 168 | 170 |
| eta 500 | Pa·s | 248 | 159 | 83 | | 202 | 126 | 112 | 87 |
| eta 1000 | Pa·s | 165 | 102 | 61 | | 155 | 85 | 81 | 50 |
| eta 1500 | Pa·s | 126 | 74 | 46 | | 131 | 72 | 68 | 37 |
| eta 5000 | Pa·s | 69 | 40 | | | 80 | 43 | 34 | |
| **Schmelzeviskosität bei 360°C** | | | | | | | | | |
| eta 50 | Pa·s | 597 | 463 | | | 380 | 339 | 204 | 309 |
| eta 100 | Pa·s | 442 | 246 | | | 282 | 219 | 151 | 195 |
| eta 200 | Pa·s | 305 | 130 | | | 224 | 141 | 112 | 117 |

(fortgesetzt)

| | | | | | | | | | |
|---|---|---|---|---|---|---|---|---|---|
| **Schmelzeviskosität bei 360°C** | | | | | | | | | |
| eta 500 | Pa·s | 169 | 60 | | | 173 | 87 | | 63 |
| eta 1000 | Pa·s | 114 | 36 | | | 126 | 65 | | |
| eta 1500 | Pa·s | 93 | 30 | | | 107 | 51 | | |
| eta 5000 | Pa·s | 50 | 15 | | | 59 | 31 | | |

In Tabelle 3 ist gezeigt, dass Diglycerolester einen deutlichen Einfluss auf die Schmelzeviskositäten Graphithaltiger Polycarbonatzusammensetzungen haben.

Die Beispiele B7 bis B9 und B10 bis B12 zeigen deutlich reduzierte Schmelzeviskositäten im Vergleich zu V3 bzw. V4, selbst bei höherem Graphitgehalt. Freie Felder bedeuten hierbei, dass die Zusammensetzungen so fließfähig waren, dass keine Bestimmung der Schmelzeviskosität mehr erfolgen konnte.

Die Glastemperaturen (Tg) verbleiben in einem hohen Bereich ($T_g$ > 125 °C).

**Tabelle 4**

| **Rezeptur** | | **V5** | **B13** | **B14** | **V6** | **B15** | **B16** |
|---|---|---|---|---|---|---|---|
| A-1 | Gew.-% | 68,00 | 68,00 | 68,00 | 58,00 | 58,00 | 58,00 |
| A-2 | Gew.-% | 6,99 | 6,19 | 5,49 | 6,99 | 6,19 | 5,49 |
| B-2 | Gew.-% | 25,00 | 25,00 | 25,00 | 35,00 | 35,00 | 35,00 |
| C | Gew.-% | - | 0,80 | 1,50 | - | 0,80 | 1,50 |
| D | Gew.-% | 0,01 | 0,01 | 0,01 | 0,01 | 0,01 | 0,01 |
| | | | | | | | |
| Tg | °C | 144,8 | 138,0 | 131,7 | 145,1 | 138,1 | 130,5 |
| **Schmelzeviskosität bei 320°C** | | | | | | | |
| eta 50 | Pa·s | 533 | 435 | 182 | 702 | 435 | 253 |
| eta 100 | Pa·s | 393 | 274 | 140 | 562 | 323 | 181 |
| eta 200 | Pa·s | 305 | 207 | 109 | 432 | 235 | 137 |
| eta 500 | Pa·s | 220 | 140 | 80 | 319 | 159 | 93 |
| eta 1000 | Pa·s | 171 | 105 | 63 | 253 | 123 | 74 |
| eta 1500 | Pa·s | 146 | 92 | 55 | 218 | 109 | 62 |
| eta 5000 | Pa·s | 86 | 58 | 37 | 116 | 68 | 37 |
| **Schmelzeviskosität bei 340°C** | | | | | | | |
| eta 50 | Pa·s | 393 | 253 | 120 | 674 | 302 | 240 |
| eta 100 | Pa·s | 302 | 175 | 85 | 512 | 224 | 154 |
| eta 200 | Pa·s | 232 | 126 | 67 | 379 | 174 | 98 |
| eta 500 | Pa·s | 164 | 86 | 46 | 253 | 117 | 60 |
| eta 1000 | Pa·s | 124 | 65 | 36 | 190 | 84 | 44 |
| eta 1500 | Pa·s | 109 | 55 | 32 | 159 | 73 | 40 |
| eta 5000 | Pa·s | 66 | 38 | 21 | 90 | 47 | 25 |
| **Schmelzeviskosität bei 360°C** | | | | | | | |
| eta 50 | Pa·s | 351 | 219 | 101 | 491 | 245 | 230 |
| eta 100 | Pa·s | 239 | 147 | 76 | 358 | 186 | 129 |

(fortgesetzt)

| Schmelzeviskosität bei 360°C | | | | | | | |
|---|---|---|---|---|---|---|---|
| eta 200 | Pa·s | 175 | 98 | 56 | 274 | 144 | 81 |
| eta 500 | Pa·s | 122 | 66 | 37 | 187 | 98 | 52 |
| eta 1000 | Pa·s | 94 | 51 | 26 | 145 | 74 | 37 |
| eta 1500 | Pa·s | 80 | 42 | 22 | 122 | 60 | 32 |
| eta 5000 | Pa·s | 49 | 27 | 14 | 71 | 37 | 20 |

In Tabelle 4 ist gezeigt, dass Diglycerolester einen deutlichen Einfluss auf die Schmelzeviskositäten Graphithaltiger Polycarbonatzusammensetzungen haben.

Die Beispiele B15, B16, B17 und B18 zeigen deutlich reduzierte Schmelzeviskositäten im Vergleich zu V5 bzw. V6. Die Glastemperaturen verbleiben in einem hohen Bereich (Tg> 125 °C).

## Patentansprüche

1. Polycarbonatzusammensetzung enthaltend

   A) 20 Gew.-% bis 94,8 Gew.-% aromatisches Polycarbonat,
   B) 5 bis 40 Gew.-% Graphit und
   C) 0,2 Gew.-% bis 3,0 Gew.-% Diglycerolester.

2. Polycarbonatzusammensetzung nach Anspruch 1, enthaltend 0,2 bis 1,2 Gew.-% Diglycerolester.

3. Polycarbonatzusammensetzung nach Anspruch 1 oder 2, **dadurch gekennzeichnet, dass** als Diglycerolester ein Ester der Formel (I) enthalten ist

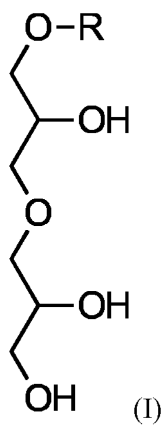

(I)

mit R = $COC_nH_{2n+1}$ und/oder R = COR',
wobei n eine ganze Zahl und R' ein verzweigter Alkylrest oder ein verzweigter oder unverzweigter Alkenylrest ist und $C_nH_{2n+1}$ ein aliphatischer, gesättigter linearer Alkylrest ist.

4. Polycarbonatzusammensetzung nach Anspruch 3, **dadurch gekennzeichnet, dass** R = $COC_nH_{2n+1}$ ist, wobei n eine ganze Zahl von 6-24, bevorzugt 8 bis 18, weiter bevorzugt 10 bis 16, besonders bevorzugt 12 ist.

5. Polycarbonatzusammensetzung nach einem der vorhergehenden Ansprüche, **dadurch gekennzeichnet, dass** der Diglycerolester Diglycerolmonolaurylester, ggf. in Mischung mit weiteren Diglycerolestern, ist.

6. Polycarbonatzusammensetzung nach einem der vorhergehenden Ansprüche, **dadurch gekennzeichnet, dass** der

Graphit ein expandierter Graphit, ggf. in Mischung mit weiterem Graphit, ist.

**7.** Polycarbonatzusammensetzung nach einem der Ansprüche 1 bis 6, bestehend aus

A) 74,0 Gew.-% bis 85,0 Gew.-% aromatischem Polycarbonat,
B) 5 bis 25 Gew.-% Graphit,
C) 0,2 bis 1,2 Gew.-% Diglycerolester,
D) optional bis zu 1,0 Gew.-% Thermostabilisator und/oder Umesterungsstabilisator und/oder
E) optional bis zu 10,0 Gew.-% eines weiteren Additivs oder mehrerer weiterer Additive aus der Gruppe der Flammschutzmittel, Antidrippingmittel, Antioxidantien, der anorganischen Pigmente, Ruß und/oder Farbstoffe sowie der anorganischen Füllstoffe Titandioxid, Silikate, Talk, Bariumsulfat und/oder Entformungsmittel.

**8.** Polycarbonatzusammensetzung nach einem der Ansprüche 1 bis 6, bestehend aus

A) 74,0 Gew.-% bis 79,6 Gew.-% aromatischem Polycarbonat,
B) 20 bis 25 Gew.-% Graphit,
C) 0,2 bis 1,2 Gew.-% Diglycerolester,
D) optional bis zu 1,0 Gew.-% Thermostabilisator und/oder Umesterungsstabilisator und/oder
E) optional bis zu 10,0 Gew.-% eines weiteren Additivs oder mehrerer weiterer Additive aus der Gruppe der Flammschutzmittel, Antidrippingmittel, Antioxidantien, der anorganischen Pigmente, Ruß und/oder Farbstoffe sowie der anorganischen Füllstoffe Titandioxid, Silikate, Talk, Bariumsulfat und/oder Entformungsmittel.

**9.** Polycarbonatzusammensetzung nach Anspruch 7, wobei die Menge des Diglyerolesters 0,8 bis 1,2 Gew.-% beträgt.

**10.** Verwendung mindestens eines Diglycerolesters zur Steigerung der Schmelzevolumenfließrate, bestimmt nach DIN EN ISO 1133 (DIN EN ISO 1133-1:2012-03) bei einer Prüftemperatur von 300°C und einer Masse von 1,2 kg, einer thermisch leitfähigen Polycarbonatzusammensetzung, enthaltend Graphit.

**11.** Verwendung nach Anspruch 10, **dadurch gekennzeichnet, dass** die Schmelzeviskosität, bestimmt nach ISO 11443, der Polycarbonatzusammensetzungen durch den Diglycerolester reduziert wird.

## Claims

**1.** Polycarbonate composition comprising

A) 20 wt% to 94.8 wt% of an aromatic polycarbonate,
B) 5 to 40 wt% of graphite and
C) 0.2 wt% to 3.0 wt% of diglycerol ester.

**2.** Polycarbonate composition according to Claim 1 comprising
0.2 to 1.2 wt% of diglycerol ester.

**3.** Polycarbonate composition according to Claim 1 or 2, **characterized in that** as diglycerol ester an ester of formula (I) is present

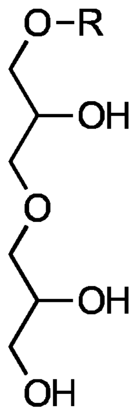

(I)

where R = $COC_nH_{2n+1}$ and/or R = COR' ,
wherein n is an integer and R' is a branched alkyl radical or a branched or unbranched alkenyl radical and $C_nH_{2n+1}$ is an aliphatic, saturated linear alkyl radical.

**4.** Polycarbonate composition according to Claim 3, **characterized in that** R = $COC_nH_{2n+1}$ wherein n is an integer from 6-24, preferably 8 to 18, more preferably 10 to 16, particularly preferably 12.

**5.** Polycarbonate composition according to any of the preceding claims, **characterized in that** the diglycerol ester is diglycerol monolauryl ester optionally in admixture with other diglycerol esters.

**6.** Polycarbonate composition according to any of the preceding claims, **characterized in that** the graphite is an expanded graphite optionally in admixture with further graphite.

**7.** Polycarbonate composition according to any of Claims 1 to 6 consisting of

A) 74.0 wt% to 85.0 wt% of aromatic polycarbonate,
B) 5 to 25 wt% of graphite,
C) 0.2 to 1.2 wt% of diglycerol ester,
D) optionally up to 1.0 wt% of heat stabilizer and/or transesterification stabilizer and/or
E) optionally up to 10.0 wt% of one or more further additives from the group consisting of flame retardants, anti-dripping agents, antioxidants, inorganic pigments, carbon black and/or dyes and the inorganic fillers titanium dioxide, silicates, talc, barium sulfate and/or demoulding agents.

**8.** Polycarbonate composition according to any of Claims 1 to 6 consisting of

A) 74.0 wt% to 79.6 wt% of aromatic polycarbonate,
B) 20 to 25 wt% of graphite,
C) 0.2 to 1.2 wt% of diglycerol ester,
D) optionally up to 1.0 wt% of heat stabilizer and/or transesterification stabilizer and/or
E) optionally up to 10.0 wt% of one or more further additives from the group consisting of flame retardants, anti-dripping agents, antioxidants, inorganic pigments, carbon black and/or dyes and the inorganic fillers titanium dioxide, silicates, talc, barium sulfate and/or demoulding agents.

**9.** Polycarbonate composition according to Claim 7, **characterized in that** the amount of diglycerol ester is from 0.8 to 1.2 wt%.

**10.** Use of at least one diglycerol ester to enhance the melt volume flow rate determined as per DIN EN ISO 1133 (DIN EN ISO 1133-1:2012-03) at a test temperature of 300° C with a mass of 1.2 kg of a thermally conductive polycarbonate composition comprising graphite.

**11.** Use according to Claim 10, **characterized in that** the melt viscosity, determined as per ISO 11443, of the polycarbonate compositions is reduced by the diglycerol ester.

**Revendications**

1. Composition de polycarbonate, contenant :

   A) 20 % en poids à 94,8 % en poids de polycarbonate aromatique,
   B) 5 à 40 % en poids de graphite et
   C) 0,2 % en poids à 3,0 % en poids d'ester de diglycérol.

2. Composition de polycarbonate selon la revendication 1, contenant 0,2 à 1,2 % en poids d'ester de diglycérol.

3. Composition de polycarbonate selon la revendication 1 ou 2, **caractérisée en ce qu'**un ester de formule (I) est contenu en tant qu'ester de diglycérol

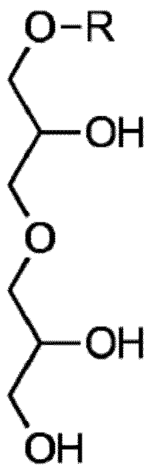

(I)

avec R = $COC_nH_{2n+1}$ et/ou R = COR', n étant un nombre entier et R' étant un radical alkyle ramifié ou un radical alcényle ramifié ou non ramifié et $C_nH_{2n+1}$ étant un radical alkyle aliphatique, saturé, linéaire.

4. Composition de polycarbonate selon la revendication 3, **caractérisée en ce que** R = $COC_nH_{2n+1}$, n étant un nombre entier de 6 à 24, de préférence de 8 à 18, de manière davantage préférée de 10 à 16, de manière particulièrement préférée de 12.

5. Composition de polycarbonate selon l'une quelconque des revendications précédentes, **caractérisée en ce que** l'ester de diglycérol est un ester monolaurylique de diglycérol, éventuellement en mélange avec d'autres esters de diglycérol.

6. Composition de polycarbonate selon l'une quelconque des revendications précédentes, **caractérisée en ce que** le graphite est un graphite expansé, éventuellement en mélange avec un autre graphite.

7. Composition de polycarbonate selon l'une quelconque des revendications 1 à 6, constituée par :

   A) 74,0 % en poids à 85,0 % en poids de polycarbonate aromatique,
   B) 5 à 25 % en poids de graphite,
   C) 0,2 à 1,2 % en poids d'ester de diglycérol,
   D) éventuellement jusqu'à 1,0 % en poids d'un thermostabilisateur et/ou d'un stabilisateur de transestérification et/ou
   E) éventuellement jusqu'à 10,0 % en poids d'un autre additif ou de plusieurs autres additifs du groupe constitué par les agents ignifuges, les agents anti-égouttement, les antioxydants, les pigments inorganiques, le noir de carbone et/ou les colorants, ainsi que les charges inorganiques, le dioxyde de titane, les silicates, le talc, le sulfate de baryum et/ou les agents de démoulage.

8. Composition de polycarbonate selon l'une quelconque des revendications 1 à 6, constituée par :

A) 74,0 % en poids à 79,6 % en poids de polycarbonate aromatique,
B) 20 à 25 % en poids de graphite,
C) 0,2 à 1,2 % en poids d'ester de diglycérol,
D) éventuellement jusqu'à 1,0 % en poids d'un thermostabilisateur et/ou d'un stabilisateur de transestérification et/ou
E) éventuellement jusqu'à 10,0 % en poids d'un autre additif ou de plusieurs autres additifs du groupe constitué par les agents ignifuges, les agents anti-égouttement, les antioxydants, les pigments inorganiques, le noir de carbone et/ou les colorants, ainsi que les charges inorganiques, le dioxyde de titane, les silicates, le talc, le sulfate de baryum et/ou les agents de démoulage.

**9.** Composition de polycarbonate selon la revendication 7, dans laquelle la quantité de l'ester de diglycérol est de 0,8 à 1,2 % en poids.

**10.** Utilisation d'au moins un ester de diglycérol pour augmenter le débit volumique à l'état fondu, déterminé selon DIN EN ISO 1133 (DIN EN ISO 1133-1:2012-03) à une température d'essai de 300 °C et une masse de 1,2 kg, d'une composition de polycarbonate thermiquement conductrice, contenant du graphite.

**11.** Utilisation selon la revendication 10, **caractérisée en ce que** la viscosité à l'état fondu, déterminée selon ISO 11443, des compositions de polycarbonate est réduite par l'ester de diglycérol.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3028635 A
- US 2999825 A
- US 3148172 A
- US 2991273 A
- US 3271367 A
- US 4982014 A
- US 2999846 A
- DE 1570703 A
- DE 2063050 A
- DE 2036052 A
- DE 2211956 A
- DE 3832396 A
- FR 1561518 A
- JP 61062039 A
- JP 61062040 A
- JP 61105550 A
- WO 2004063249 A1
- WO 200105866 A1
- WO 2000105867 A
- US 5340905 A
- US 5097002 A
- US A5717057 A
- US 1137373 A
- US 1191383 A
- US 3404061 A
- EP 0839623 A
- WO 9615102 A
- EP 0500496 A


### In der Beschreibung aufgeführte Nicht-Patentliteratur


- Chemistry and Physics of Polycarbonates. **SCHNELL.** Polymer Reviews. Interscience Publishers, 1964, vol. 9
- **D. FREITAG ; U. GRIGO ; P.R. MÜLLER ; H. NOUVERTNE ; BAYER AG.** Polycarbonates. *Encyclopedia of Polymer Science and Engineering,* 1988, vol. 11, 648-718
- Polycarbonate. **U. GRIGO, K. KIRCHNER ; P.R. MÜLLER.** Kunststoff-Handbuch, Band 3/1, Polycarbonate, Polyacetale, Polyester, Celluloseester. Carl Hanser Verlag München, 1992, vol. 3/1, 117-299
- Plastics Additives Handbook. Hanser Verlag, 2000